# EUROPEAN PATENT APPLICATION

(11) **EP 0 926 398 A2**
(43) Date of publication of application: **30.06.1999**
(21) Application number: 98124154.0
(22) Date of filing: 19.12.1998
(51) Int. Cl.: F16H 55/14

(54) **Transmission gear**

(30) Priority: 22.12.1997 SK 177297
(71) Applicant: Trens a.s., 91132 Trencin (SK)
(72) Inventor: Novota, ladislav, 91100 Trencin (SK); Hladky, Viktor, 91101 Trencin (SK)
(74) Representative: Bergmeier, Werner, Dipl.-Ing.

(57) **Abstract**

Transmission gear, preferably for machine tools spindle drive, comprises a system of gear wheels, where at least one gear wheel is split by radial plane to two angulary displaceable parts. The gear wheel (1) split by radial plane at least to two parts, comprises in one of these parts a recess (6), where a spring-loaded ring (3) is bedded, into which blocks (4) axially shifted against each other inserts. Spring-loaded ring (3) is firmly attached to segments (5).

## Description

### Field of the invention

The present invention relates to transmission gear, preferably to drive machine tools spindles, comprising a shaft and a system of gear wheels.

### Prior art

Geared transmissions are used for transmission of torque from motor to driven machine ends. In the finish of transmission gear starting in the run idle machine, single parts of spindle drive get torsional oscillation, that is caused by their unequal angular velocity. Thereby the spindle drive makes periodical rattlinglike noise in increased level. This increased noise level results from teeth sides impact of meshing gears.

These impacts acoustically present as rattlinglike sound, which significantly grows beyond the regular noise level of head-stocks. The sound is even more recognizable as the manufacturing of machine tools tends to decrease the noise level of the products, and varies with every change of spindle speed, or shifting the gears.

This phenomenon, called also as irregular running of gear wheels of transmission gears in the run idle machines, is currently eliminated by the appropriate selection and frequent replacement of belts, belt pulleys, whole shafts, pairing the gear wheels and other adjustments.

There is known solution, e.g. from Russian patent No. 714 084, based on, that the gear wheel has, between the rim and the hub, grooves equally distributed on perimeter, filled with elastic elements with damping footings in order to decrease the level of vibrations. The drawback of this solution stays in that, the value of tension between driven shaft and transmission gear remains the same with the change of gear speed.

Besides that, a number of solutions is presented, where eliminating the backlash to prevent objectionable noises and minimizing power losses while effecting smooth engagement between mating gears, tends to be completed by splitting the gear wheel to two or more parts, respectively.

Majority of solutions presents a radially split gear wheel, where portions obtained in such manner are subsequently firmly attached to each other by mechanical means. Mentioned solutions partially eliminates backlash, however only within narrow scope determined by the play of mechanical fixed joint.

According to US patent No. 3,803,935, this problem is solved such, that a main drive gear is provided with radially extending guide slots, where weight members with sliding elements having a projection on their end are disposed and biased by spring means. An auxiliary gear element corresponds with the main drive gear, being identical with the main drive gear as to the number of teeth and outer diameter, and it is freely rotatable on common shaft. This auxiliary gear element has a hub member adjacent the main drive gear, which has at least two concave portions formed on its perimeter engaging with the projection of the weight member.

The assembly of such arranged gear wheel is relatively complex, with a number of complicated parts, whose manufacturing demands at least specialized tools or numeric controlled machine. The value of spring-load or centrifugal force can not be simply manipulated.

Spring means cause system unbalance, due to the spring characteristics tolerance. It is not possible to secure change of passive resistance with slidable elements of weight members displaced in guide slot. Besides that, the effect of such assembly of main drive gear of geared transmission varies with relatively fast wear of single construction parts.

### Summary of the invention

The above mentioned drawbacks are in major part eliminated by transmission gear, preferably to drive machine tool spindles, comprising the shaft and the system of gear wheels, where at least one gear wheel is split by radial plane to two angulary displaceable parts, based in that, the gear wheel split by radial plane at least to two parts angulary displaceable, comprises in one of these parts a recess, where a spring-loaded ring is bedded, into which blocks axially shifted against each other inserts. Spring-loaded ring is firmly attached to segments.

Solution according to present invention involves fewer parts, that can be manufactured by conventional simple technologies. Spring-load of the ring can be adjusted by changing the dimensions of the blocks. Usage of spring-loaded ring allows equal force distribution along the perimeter, thereby preventing global unbalance of system. By means of damping element, transmission gear permits changing reasonably passive resistances, either increase or decrease them until total elimination.

### Brief description of the drawings

The present invention is closely described by the drawing, where fig. 1 illustrates transmission gear in longitudinal section, fig. 2 cross section of gear wheel, split by radial plane to two parts and fig. 3 schematic illustration of the blocks placement.

### Description of the preferred embodiment

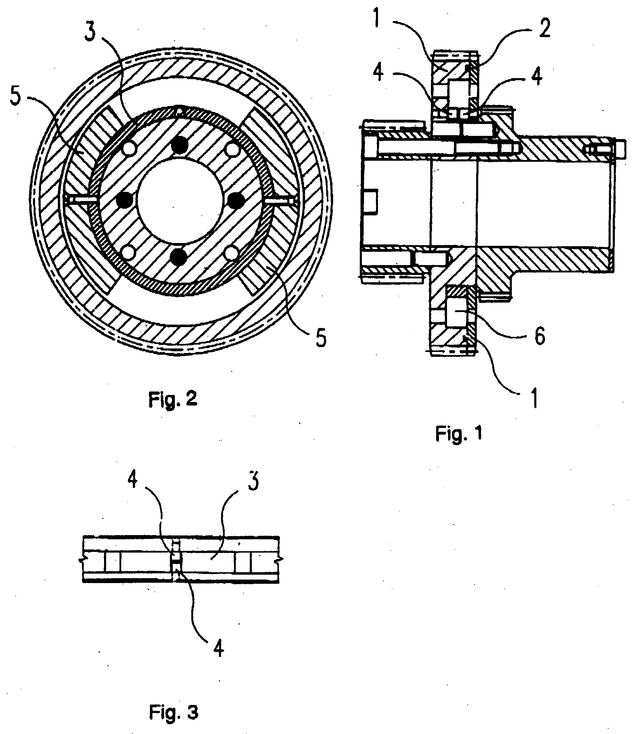

The transmission gear, as shown in fig. 1, comprises a system of gear wheels having common shaft. Gear wheel **1** is split by radial plane to two angulary displaceable parts. In such manner split gear wheel **1**, the recess **6** is made in its wider portion. Recess **6** is bedding spring-loaded ring **3**, into which blocks **4** insert, axially shifted against each other. Spring-loaded ring **3** is firmly attached to segments **5**.

Both parts of gear wheel **1** split by axial plane, are torsionally spring-loaded, and value of the spring-load is function of dynamic characteristics of the entire rotating gear and angular speed of its parts. During the start of transmission gear, a centrifugal force creates, causing the decrease in spring-load of the ring **3** and thereby releasing the blocks **4**. The parts of gear wheel **1** angulary moves along each other, what results in smooth engagement between gear wheel **1** and corresponding mating gear, while eliminating mutual impacts of tooth sides, and thereby preventing rattlinglike noise, characteristic for current machine tools operation. During the increase of spindle speed, the torsional oscillation decreases and segments **5** stretch spring-loaded ring **3**, while releasing the blocks **4**. When releasing the blocks **4**, torsional spring-load of gear wheel **1** portions annuls, their gearings align and meshing gear wheel continues in operation under load as conventional compact gear wheel of rotating gearing. The damping element **2** can be inserted between angulary displaceable portions of gear wheel **1**, that provides stabilizing effect for mutual oscillation of gear wheel portions.

Transmission gearing according to present invention, provides equalization of angular speed of its single parts and thereby eliminates their torsional oscillation, resulting in significant decrease of noise level of gearings when run idle.

In comparison to known solutions, the transmission gear according to present invention allows to change the value of spring-load of gear wheels in transmission gearing.

Its functioning resides as well in, that it transmits torque from a shaft through gear wheel to another gearing. When other gear is shifted, gear wheel functions as intermediate gear wheel. In both cases, the backlash is eliminated, while decreasing the spindle drive noise level.

At last but not least, it presents reliable, simply manufacturable system, whose utilization offers satisfying results in global decrease of machines noise level at low costs.

### Industrial application

Transmission gear according to present invention is widely applicable in machine industry, preferably in machines, whose run idle transmission gear shows phenomenon called as irregular running. Advantageously is used in transmission gears of machine tools spindles.

## Claims

1. Transmission gear, preferably for machine tools spindle drive, comprising a system of gear wheels, where at least one gear wheel is split by radial plane to two angulary displaceable parts, **characterized in,** that the gear wheel (1) split by radial plane at least to two parts angulary displaceable, comprises in one of these parts a recess (6), where a spring-loaded ring (3) is bedded, into which blocks (4) axially shifted against each other inserts, while spring-loaded ring (3) is firmly attached to segments (5).
